# EUROPEAN PATENT APPLICATION

(11) **EP 3 483 350 A1**
(43) Date of publication of application: **15.05.2019**
(21) Application number: 16744796.0
(22) Date of filing: 06.07.2016
(51) Int. Cl.: E02F 9/28, A01B 23/02, E21C 35/18

(54) **WEAR OR PROTECTION SYSTEM FOR A TOOL OF A MACHINE FOR MOVING EARTH AND CORRESPONDING PIN**

(71) Applicant: Metalogenia Research & Technologies S.L., 08005 Barcelona (ES)
(72) Inventor: MARQUEZ LLINAS, Jordi, 08223 Terrassa (ES); ALVAREZ PORTELLA, Eduard, 08019 Barcelona (ES); TRIGINER BOIXEDA, Jorge, 08017 Barcelona (ES); TUTÓ FAJA, Joan, 17458 Fornells de la Selva (ES)
(74) Representative: Curell Suñol S.L.P.
(86) International application number: PCT/ES2016/070503
(87) International publication number: WO 2018/007652

(57) **Abstract**

The invention relates to a wear or protection system for a tool of an earth moving machine, comprising a wear element (1), a support (3) and a pin (7) with elastic means (13) housed in a housing (5) having a base surface (27) and a compression surface (29). The base surface (27) and a first portion (31) of the compression surface (29) belong to the wear element (1), and the distance between both has a fixed value Df. A second portion (33) of the compression surface (29) belongs to the support (3), and the distance between the base surface (27) and the second portion (33) is variable depending on the wear of the system, having a minimum value Dmin when the system is new and increasing as wear increases. Dmin is less than Df. The pin (7), in the compressed state, has a height H equal to Dmin, and as the system becomes worn, H increases until reaching the value Df. The pin (7) comprises a recess (23) in its upper surface, and in the first portion (31) there is a projection (25), suitable for being housed in the recess (23).

## Description

### Field of the Invention

The invention relates to a wear or protection system for a tool of an earth moving machine, comprising a wear element, a support supporting the wear element, and a pin, where when the wear element is mounted on the support there is defined between both a housing in the form of a through hole suitable for housing the pin (such that when the pin is in the housing the wear element is fixed to the support, thereby defining a mounted position), where the pin has a lower surface and an upper surface and elastic means such that the distance between the lower surface and the upper surface is variable depending on the value of a compressive force applied on the upper surface, where the housing has a base surface facing the lower surface when the pin is in the housing, and a compression surface facing the upper surface when the pin is in the housing.

The invention also relates to a pin for a wear or protection system for a tool of an earth moving machine, comprising a wear element, a support supporting the wear element, and the pin of the invention, where when the wear element is mounted on the support there is defined between both a housing in the form of a through hole suitable for housing the pin, where the pin has a lower surface and an upper surface and elastic means such that the distance between the lower surface and the upper surface is variable depending on the value of a compressive force applied on said upper surface.

Wear or protection systems generally have various geometries that are more or less complex, depending on the specific application for which the system is intended. Therefore, a common case is for the wear system to be formed by an adapter that is fixed to a shovel by welding, and a tooth that is fixed to the shovel by means of one or more pins. In this specific case, the adapter would be what is referred to in the present description and claims as support, and the tooth would be the wear element. However, the adapter also undergoes wear, so it must also be replaced on a rather frequent basis. Therefore, there are also wear systems in which the adapter is in turn fixed to the shovel (or to another support element of the shovel) by means of pins. In other applications, the teeth are not fixed to shovels but rather to other tools used in mining or in dredging operations. In other applications, the wear elements are not teeth but rather protection parts, such as for example those that are placed on the blade of the shovel between the teeth. The present invention generally relates to any pair of elements of a wear system that are fixed to one another by means of one or more pins used in tools of earth moving machines.

Generally, the wear element has a cavity suitable for housing therein a nose or protuberance present in the support, such that in a mounted position, the nose is inside the cavity and the mentioned housing for the pin is defined. However, the present invention does not exclude other alternatives in which the cavity is present in the support and the nose is present in the wear element, or other alternatives with other different geometries.

The pin is the element that prevents the wear element from becoming detached once it has been mounted on the support.

It must be taken into account that the pin is designed for a specific support and wear element pair. The designer must therefore know all the details of both the support and wear element affecting the pin. The designer must particularly know the relevant dimensions for the design of the pin. Additionally, it must be taken into account that the wear system is designed to sustain given wear. In this sense, the expected wear of the wear system and how it will affect the pin and the dimensions of the wear element and of the support affecting the pin are known. Therefore, it must be considered that all this information "is part of the pin itself" since they are pre-established values for the design thereof.

Expressions such as "upper" and "lower" have been used in the present description and claims and must be understood as being indicative of a mere relative position since the wear system, during use, will adopt any position in space.

### State of the Art

Wear systems in which one or more pins are used for fixing the wear element to the support are known. Including elastic means which tend to expand the pin such that it is necessary to compress the elastic means for housing the pin in its housing is also known. The pin is thereby locked within the housing such that it cannot come out during use of the machine.

However, these wear systems are subjected to very demanding work conditions. During use, the cavity of the wear element moves in relation to the protuberance or nose of the adapter or support, which produces internal wear which, together with deformations produced by extreme pressures (impacts) between said nose and cavity, causes the dimensions of the housing to change. Additionally, during use wear systems are subjected to impacts, vibrations, high temperatures, etc. All this can lead to the elastic means being insufficient for retaining the pin within the housing.

To solve these problems, pins have been proposed which, in addition to elastic means, include projections suitable for being housed in corresponding recesses arranged in the wear element or in the support, for the purpose of improving the locking of the pin in its mounted position. Examples of these wear systems can be found in patent documents US 5,469,648, US 6,030,143 and US 9,074,349.

However, the solutions proposed in the state of the art are insufficient, so there is still a need for new wear systems that solve the aforementioned problems.

### Description of the Invention

This purpose is achieved by means of a wear system of the type indicated above, characterized in that
the base surface and a first portion of the compression surface belong to one of said wear element and support, and the distance between the base surface and the first portion has a fixed value Df, whereas a second portion of the compression surface belongs to the other one of said wear element and support, where the distance between the base surface and the second portion is variable depending on the wear of the wear element and of the support, having a minimum value Dmin when the wear element and the support are new and increasing as the wear element and the support become worn, where Dmin is less than Df,
where the pin, in the compressed state, has a height H equal to the minimum value Dmin, and as the wear element and the support become worn, the elastic means increase the height H until reaching the value Df, and
where the pin comprises a projection or a recess in one of the lower or upper surfaces, and there is a recess or a projection, respectively, suitable for housing the projection or the recess of the pin, in the base surface or the first portion, respectively.

The basic concept of the invention is in fact based on the following:
- the housing is defined by a plurality of surfaces, some of which belong to the wear element and others belong to the support;
- the housing varies in size and/or shape as the wear of the wear system progresses. However, it only varies in those dimensions in which one point is of a surface of the wear element and the other one is of a surface of the support;
- the elastic means tense or compress the pin against two surfaces opposite one another (the base surface and the compression surface), where at least one of the surfaces is formed simultaneously by a portion belonging to the wear element and another portion belonging to the support (the first and second portions);
- therefore, a variation in distance between the base surface and the compression surface as wear progresses will be different according to whether it is the first portion or the second portion. In one case, the distance will not change over time since both surfaces belong to the same part, whereas in the other case the distance will change as wear progresses;
- when the wear system is new (without having experienced wear), the smallest distance between the base surface and the compression surface will be the distance between the base surface and the portion of the compression surface belonging to the other part. However, this distance will gradually increase until being greater than the distance Df, which is the distance between the base surface and the portion of the compression surface belonging to the same part as the base surface;
- therefore, the pin will gradually expand until its height is equal to Df. After this point, it will not expand further;
- during expansion of the pin, the projection will gradually be introduced in the recess, such that this introduction will reach a maximum value when the pin has expanded as much as possible.

Generally, the material of the support is softer than the material of the wear element. As a result, erosion or abrasion due to friction and/or impacts leads to the component the measurements of which are reduced the most being the front end of the nose of the support. In the case of wear systems according to the state of the art, since the pin is pressing or tensing the wear element on the support, the wear element moves backwards, "filling in" the gap formed by abrasion. However, this can only take place while the elastic element is compressed and is capable of maintaining tension, even if the pin gradually expands, so the friction force between the pin and the walls of the housing is gradually reduced. Furthermore, when the backward movement of the wear element prolongs more than what the pin can extend, the latter remains in its housing without any force capable of retaining it. All this leads to the wear element coming out of its housing. However, in the wear system of the present invention, as the pin gradually expands, the recess goes further into the projection, so the locking capacity that is obtained as a result of this effect gradually increases.

With the system according to the invention, two advantages are obtained:
The expansion of the pin is limited to a maximum value (when H is Df), so it can be suitably designed such that with this value the friction force (between the pin and the walls of the housing) is still suitable. In other words, although the distance between the base surface and the second portion continues to increase up to values greater than Df, the expansion of the pin will be limited by the first portion. Additionally, when the pin is subjected to minimum friction force (since it is expanded as much as possible), the projection and the recess offer maximum locking.

When indicating that Df has a fixed value, it must be understood as a fixed value in time. In fact, the actual geometry of wear systems is usually complex. Therefore, the base surface and the first portion are usually complex surfaces, so the distance between them will change depending on the point considered. However, what is important in the present invention is that for a given point, the distance Df does not change over time, i.e., it does not change as the wear of the wear system gradually progresses.

The wear element is preferably a tooth.

The support is preferably an adapter.

The pin advantageously comprises a recess in said upper surface and there is a projection, suitable for being housed in said recess, in said first portion. So when the wear system is new (and therefore Dmin is less than Df), the projection arranged in the first portion does not interfere (or it interferes less) with the pin, so the force that must be applied to the pin to introduce it in the housing is less.

Preferably, the base surface and said first portion of said compression surface belong to said wear element, and said second portion belongs to said support.

The pin advantageously comprises a shell, a retainer and elastic means, where:
[a] the shell is elongated, defining a longitudinal axis, and has a lower surface which is the lower surface of the pin and a longitudinal hole having a closed front end and an open rear end, where the longitudinal hole has an upper opening, opposite the lower surface of the shell, extending to the rear end, where the opening has a width, measured in a transverse direction with respect to the longitudinal axis, less than the maximum width, measured in the transverse direction, of the hole,
[b] the retainer is housed in the longitudinal hole and has an upper surface, which is the upper surface of the pin, and projects through the opening, and a lower surface, where the retainer has an upper segment with a width, measured in a transverse direction with respect to the longitudinal axis, less than the width of the opening (such that the upper segment can move transversely with respect to the opening), and a lower segment with a width, measured in a transverse direction with respect to said longitudinal axis, greater than the width of the opening (such that it cannot pass through the opening, i.e., such that the retainer cannot come out completely through the opening),
[c] the elastic means are arranged between a lower surface of the hole and the lower surface of the retainer.

As will be seen below in the explanation of the preferred embodiments of the invention, this pin allows complying with all the requirements of the invention, and at the same time it is cost-effective, has few parts and is mounted quickly.

Preferably, there are first locking means between the hole of the shell and the elastic means (suitable for preventing axial and backwards sliding of the elastic means with respect to the hole), and there are second locking means between the elastic means and the retainer (suitable for preventing axial and backwards sliding of the elastic means with respect to the retainer, or vice versa). In fact, the presence of these locking means allows introducing in the shell, through the open rear end, the elastic means and the retainer, the locking means preventing the elastic means and/or retainer from coming back out.

The elastic means are preferably an elongated part that is elastically compressible in a transverse direction with respect to said longitudinal axis, with an upper surface facing said lower surface of the retainer, and a lower surface oriented towards the lower surface of the pin. The elastic means advantageously comprise a first upper segment made of a solid material and a second elastic lower segment, i.e., the second segment is responsible for exerting the elastic function, whereas the upper segment provides rigidity to the assembly and makes it easier to mount the retainer on the elastic means. It is particularly advantageous for the elastic means to comprise a first upper segment made of a polymeric material, preferably polyurethane, and a second lower segment made of an elastic polymeric material with multiple gas-filled, closed internal cavities. In fact, it is the elastic polymeric material with multiple gas-filled, closed internal cavities that primarily carries out the elastic function as a result of its gas-filled, closed internal cavities (which allow being elastically compressed). In turn, the upper segment provides greater rigidity to the assembly and makes it easier to mount the retainer on the elastic means (as will be seen below, an advantageous mounting sequence of the pin provides, first of all, introducing the elastic means in the hole of the pin, and then introducing the retainer, which must slide over the elastic means while partially compresses them the same time).

The first locking means preferably comprise at least one projection with a height, measured in a transverse direction with respect to the longitudinal axis, increasing from a point close to the front end to a point close to the rear end, and a recess suitable for housing the projection, where the projection is in the elastic means and the recess is in said hole, or vice versa. The first locking means are advantageously formed by a single projection and a single recess. It is also advantageous for the projection to be in the lower surface of the elastic means and the recess to be in the lower surface of the hole.

Similarly, it is advantageous for the second locking means to comprise at least one projection having a height, measured in a transverse direction with respect to the longitudinal axis, increasing from a point close to the front end to a point close to the rear end, and a recess suitable for housing the projection, where the projection is in the retainer and the recess is in the elastic means, or vice versa. In this case, it is advantageous for there to be a plurality of recesses and projections since, each of them can be made to have a smaller height, which makes the subsequent insertion of the retainer easier, but the sum of all of them may continue to offer the required locking level. Preferably, the projection (or projections) is in the lower surface of the retainer and the recess (or recesses) is in the upper surface of the elastic means.

As discussed above, the front end of the hole is closed. The wall closing the front end preferably has a thickness greater than the thickness of the side walls surrounding the hole. In fact, one on hand, the front end is used for exerting the force required to introduce the pin in the housing. This is usually done with a hammer or a similar tool, so the front end of the pin must be capable of withstanding the impacts of the hammer. On the other hand, this end will also be exposed to wear, so part of the material forming this wall will be eliminated by erosion. Therefore, this wall must be sized such that it lasts the entire estimated service life of the pin.

Another object of the invention is a pin such as the one indicated above, characterized in that it comprises a shell, a retainer and elastic means, where:
[a] the shell is elongated, defining a longitudinal axis, and has a lower surface which is said lower surface of the pin and a longitudinal hole having a closed front end and an open rear end, where the longitudinal hole has an upper opening, opposite the lower surface of the shell, extending to the rear end, where the opening has a width, measured in a transverse direction with respect to the longitudinal axis, less than the maximum width, measured in the transverse direction, of the hole,
[b] the retainer is housed in the hole and has an upper surface, which is the upper surface of the pin, and projects through the opening, and a lower surface, where the retainer has an upper segment with a width, measured in a transverse direction with respect to the longitudinal axis, less than the width of the opening (such that the upper segment can move transversely with respect to the opening) and a lower segment with a width, measured in a transverse direction with respect to the longitudinal axis, greater than the width of the opening (such that it cannot pass through the opening, i.e., such that the retainer cannot come out completely through the opening),
[c] the elastic means are arranged between a lower surface of the hole and the lower surface of the retainer.

Preferably, there are first locking means between the hole and the elastic means (suitable for preventing axial and backwards sliding of the elastic means with respect to the hole), and there are second locking means between the elastic means and the retainer (suitable for preventing axial and backwards sliding of the elastic means with respect to the retainer, or vice versa).

The elastic means are advantageously an elongated part that is elastically compressible in a transverse direction with respect to the longitudinal axis, with an upper surface facing the lower surface of the retainer, and a lower surface oriented towards the lower surface of the pin.

The elastic means advantageously comprise a first upper segment made of a solid material and a second elastic lower segment.

The elastic means preferably comprise a first upper segment made of a polymeric material, preferably polyurethane, and a second lower segment made of an elastic polymeric material with multiple gas-filled, closed internal cavities.

The first locking means advantageously comprise at least one projection with a height, measured in a transverse direction with respect to the longitudinal axis, increasing from a point close to the front end to a point close to the rear end, and a recess suitable for housing the projection, where the projection is in the elastic means and the recess is in the hole, or vice versa. Preferably the projection is in the lower surface of the elastic means and the recess is in the lower surface of the hole.

The second locking means advantageously comprise at least one projection having a height, measured in a transverse direction with respect to the longitudinal axis, increasing from a point close to the front end to a point close to the rear end, and a recess suitable for housing the projection, where the projection is in the retainer and the recess is in the elastic means, or vice versa. Preferably, the projection is in the lower surface of said retainer and the recess is in the upper surface of the elastic means.

Generally, the advantages and alternatives of the preferred embodiments of the pin have already been discussed above in the paragraphs corresponding to the description of the pin of the wear system.

### Brief Description of the Drawings

Other advantages and features of the invention can be seen from the following description in which preferred embodiments of the invention are described in reference to the attached drawings in a non-limiting sense. In the drawings:
Figure 1 shows a perspective view of a wear system formed by a wear element, a support and a pin.
Figure 2 shows a partially exploded perspective view of a pin.
Figure 3 shows a perspective view of the pin of Figure 2, mounted and in a decompressed state.
Figure 4 shows a perspective view of the pin of Figure 3 in a compressed state.
Figure 5 shows a detailed view of the area corresponding to the housing of a wear element and a support in the mounted position.
Figure 6 shows the view of Figure 5, with the pin housed in the housing.
Figure 7 shows a view equivalent to Figure 6, with the wear system worn.
Figure 8 shows a view of the tooth and the pin of Figure 6, without the support.
Figures 9 to 12 show left side elevational, plan, right side elevational and front elevational views, respectively, of a pin according to the invention.
Figures 13 to 16 show cross-section, left side elevational, longitudinal section and top perspective views, respectively, of the shell of the pin of Figures 9 to 12.
Figures 17 to 20 show bottom perspective, plan, cross-section and side elevational views of the retainer of the pin of Figures 9 to 12.
Figures 21 to 24 show bottom perspective, plan, cross-section and side elevational views of the elastic means of the pin of Figures 9 to 12.
Figures 25 to 28 show perspective views of a mounting sequence of a pin according to the invention.
Figure 29 shows a cross-section of the assembly of the pin of Figures 9 to 12.

### Detailed Description of Embodiments of the Invention

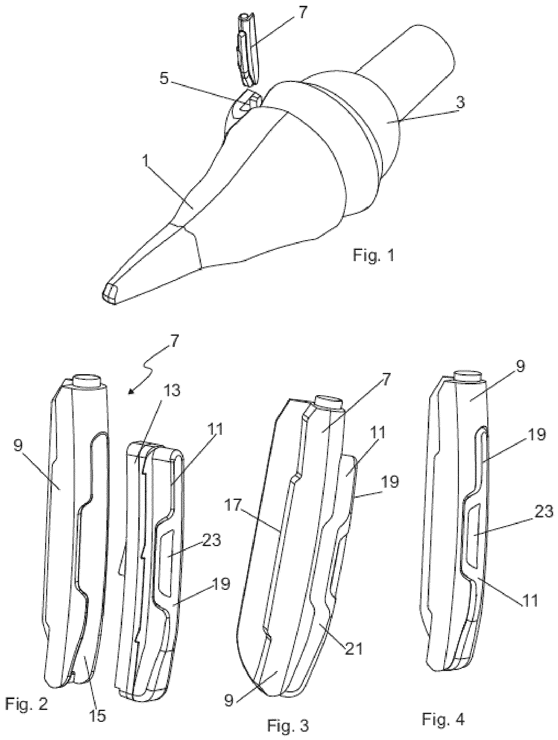

Figure 1 shows a wear system comprising a wear element 1, specifically a tooth, and a support 3, specifically an adapter. When the wear element 1 and the support 3 are in their mounted position, there is defined between both a housing 5 suitable for housing a pin 7 therein. The housing 5 is a through hole going through the assembly formed by the wear element 1 and the support 3. When the pin 7 is in the housing 5, the wear element 1 is locked onto the support 3.

The pin 7 is an elongated part defining a longitudinal axis and is formed by a shell 9, a retainer 11 and elastic means 13 arranged between the shell 9 and the retainer 11 (see Figures 2 to 4, 9 to 12 and 29). The retainer 11 projects from the shell 9 through an upper opening 15 existing in the shell 9, pushed by the elastic means 13. The pin 7 has a lower surface 17 (in the shell 9) and an upper surface 19 (in the retainer 11). The elastic means 13 tend to separate the lower surface 17 from the upper surface 19, such that the height H of the pin 7, i.e., the distance between the lower surface 17 of the pin 7 and the upper surface 19 of the pin 7, measured in the direction perpendicular to the longitudinal axis and measured in the actuating direction of the elastic means 13, is variable, adapting to the available space. To that end, the retainer 11 has an upper segment 21 with a width less than the width of the opening 15, such that it can move through the opening 15. Figure 3 shows the pin 7 with its upper surface 19 far from the shell 9, whereas Figure 4 shows the pin 7 with the upper surface 19 close to the shell 9 (with the elastic means completely compressed).

Additionally, the pin 7 comprises a recess 23 in its upper surface 19, suitable for housing a projection 25 that will be described below.

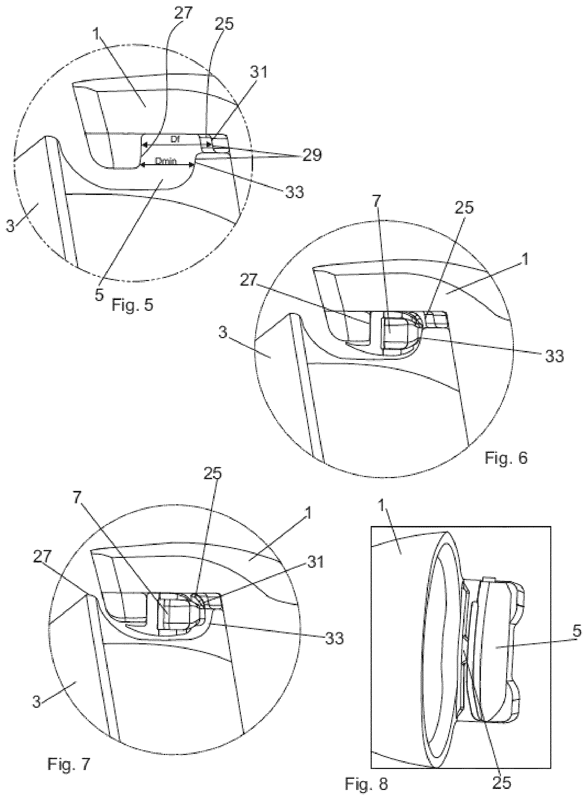

Figure 5 shows the housing 5 that is formed when the wear element 1 and the support 3 are in their mounted position. The housing 5 has a base surface 27, which is what will face the lower surface 17 of the pin 7 when the pin 7 is inserted in the housing 5, and a compression surface 29, which is what will face the upper surface 19 of the pin 7 when the pin 7 is inserted in the housing 5. The compression surface 29 is in turn sub-divided into a first portion 31, which is part of the wear element 1, and a second portion 33, which is part of the support 3. The distance Df, which is the distance between the base surface 27 and the first portion 31, and the distance Dmin, which is the distance between the base surface 27 and the second portion 33, can therefore be defined in the housing 5. As can be seen in Figure 5, Dmin is less than Df, representing the situation when the wear system is new.

Additionally, the first portion 31 of the compression surface 29 includes a projection 25, suitable for being housed in the recess 23 of the upper surface 19 of the pin 7.

Figure 6 corresponds with Figure 5 in which the pin 7 has additionally been depicted in the housing 5. The elastic means 13 of the pin 7 push its upper surface 19 out, such that it comes into contact with the compression surface 29, in the present case with the second portion 33.

Figure 7, which corresponds with Figure 6, depicts the situation in which the wear system has already been subjected to substantial wear. In this case, due to the wear occurring between the wear element 1 and the support 3, the wear element 1 is moved more towards the left (according to Figure 6). This leads to as change in geometry in the housing 5, such that Df is now less than Dmin. Accordingly, the upper surface 19 of the pin 7 abuts with the first portion 31 of the compression surface 29. This is the case shown in Figure 7. Additionally, the projection 25 is housed in the recess 23. As can be seen, the greater the wear, the greater the increase in the distance Dmin, so the greater the increase in the value H, and the more the projection 25 will penetrate the recess 23, increasing its locking effect, until H reaches the value Df. After this point, the pin 7 will be retained between the base surface 27 and the first portion 31, with the projection 25 completely fitted in the recess 23. Regardless of the possible additional wear the wear system may experience, the pin 7 is perfectly locked in the housing 5 without any risk of it being able to come out of same. The pin 7 can be taken out of the housing 5 to replace the wear element 1 with a new one by simply exerting a considerable force on said pin 7 by means of a hammer, for example.

Figure 8 shows an equivalent side view of the position shown in Figure 7, in which the support 3 has been removed in order to better see the exact position of the pin 7, which is locked between the base surface 27 and the first portion 31 of the compression surface 29, and the projection 25 of the wear element 1 is inserted in the recess 23 of the pin 7.

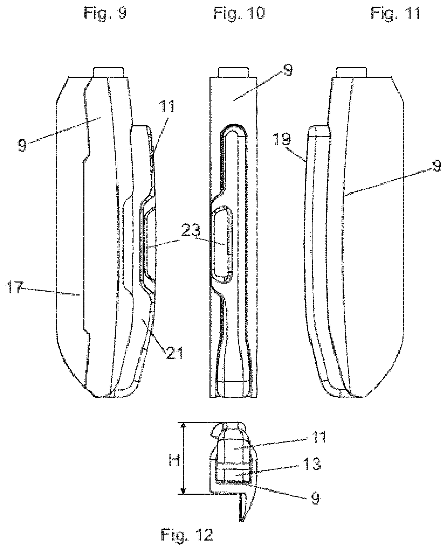

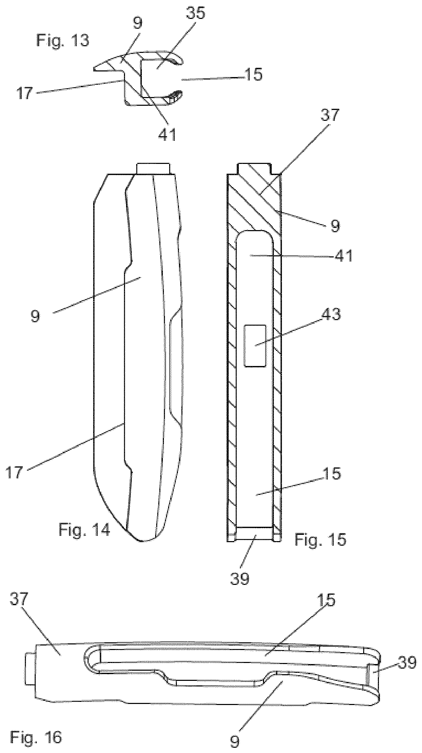

Figures 13 to 16 show the shell 9 of the pin 7 of Figures 9 to 12. The shell 9 is elongated in the same way as the housing 5 and the pin 7 itself. Its lower surface is the lower surface 17 of the pin 7. It has a longitudinal hole 35 having a closed front end 37 and an open rear end 39. Additionally, the longitudinal hole 35 has an opening 15 in its upper portion. This opening 15 has a width which is less than the maximum width of the longitudinal hole 35. Opposite the opening 15, the longitudinal hole 35 has a lower surface 41 in which there is a recess 43.

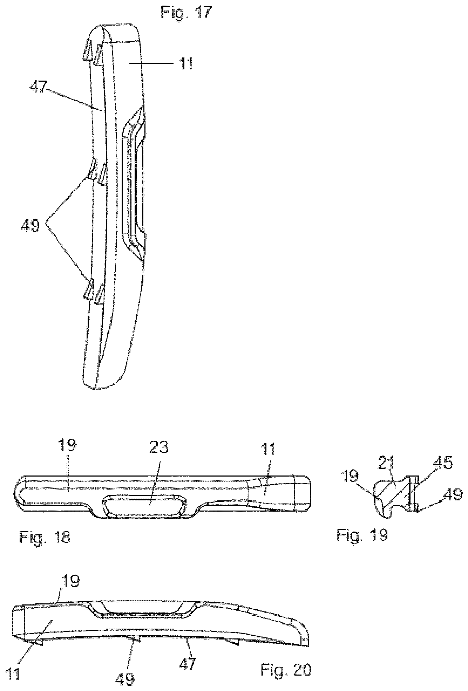

Figures 17 to 20 show the retainer 11 of the pin 7 of Figures 9 to 12. The retainer 11 has an upper surface which is the upper surface 19 of the pin 7. The retainer 11 has an upper segment 21 having a width less than the width of the opening 15 and a lower segment 45 with a width greater than the width of the opening 15. So when the retainer 11 is within the longitudinal hole 35, the upper segment 21 may come out more or less through the opening 15, but the lower segment 45 may not go through the opening 15, which will prevent the retainer 11 from being able to come out of the shell 9 through the opening 15. The recess 23 is arranged in the upper surface 19. Opposite the upper surface 19, the retainer 11 has a lower surface 47 in which there is a plurality of projections 49 the height of which is increasing as it approaches the rear end 39 of the longitudinal hole 35.

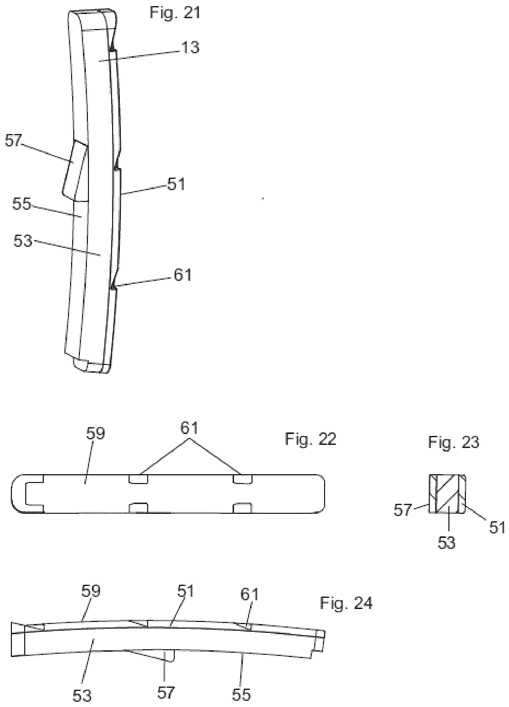

Figures 21 to 24 show the elastic means 13 of the pin 7 of Figures 9 to 12. The elastic means 13 are basically an elongated sheet arranged between the retainer 11 and the lower surface 41 of the longitudinal hole 35. In the mounted position, the elastic means 13 are compressed between the shell 9 and the retainer 11, such that they tend to push the retainer 11 towards the opening 15. The elastic means 13 are formed by two sheets. The first sheet, forming the first upper segment 51 of the elastic means 13, is made of a solid polymeric material, preferably polyurethane. In turn, the second sheet forms the second lower segment 53 of the elastic means 13 and is made of an elastic polymeric material with multiple gas-filled, closed internal cavities. For example, this second sheet can be made of a material commercially known as Cellasto®, by BASF®. The second sheet is basically responsible for exerting the elastic force, whereas the main function of the first sheet is to provide a smooth and relatively hard surface over which the retainer 11 can suitably slide in the mounting operation of the pin 7.

The elastic means 13 have a lower surface 55 oriented towards the lower surface 17 of the pin 7 in which there is a projection 57, the height of which is increasing as it approaches the rear end 39 of the longitudinal hole 35 and which is suitable for being housed in the recess 43 arranged in the lower surface 41 of the longitudinal hole 35. The recess 43 and the projection 57 therefore define first locking means. The elastic means 13 also have an upper surface 59 facing the lower surface 47 of the retainer 11, in which there is a plurality of recesses 61 suitable for housing therein the projections 49 of the retainer 11. The recesses 61 and the projections 49 therefore define second locking means.

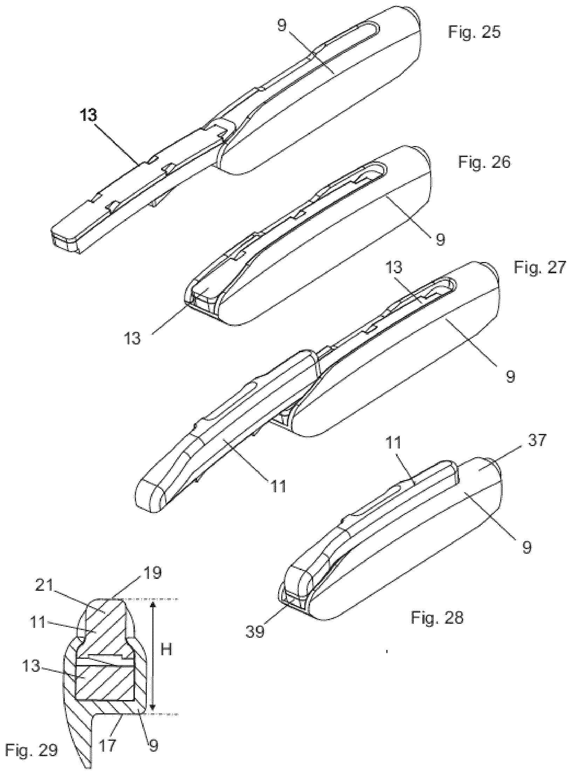

Figures 25 to 28 schematically show the mounting sequence of the pin 7. First (Figures 25 and 26) the elastic means 13 are introduced in the longitudinal hole 35 of the shell 9 through the open rear end 39. Given that the elastic means 13 can loosely enter the longitudinal hole 35, there is no problem with the size of the projection 57 of its lower surface 55 or with the fact that it is made of a Cellasto® type material, since no force has to be applied to the elastic means 13 in this operation. Then (Figures 27 and 28) the retainer 11 is inserted through the rear end 39 of the longitudinal hole 35. The retainer 11 slides over the upper surface 59 of the elastic means 13 until the projections 49 of the lower surface 47 of the retainer 11 are housed in the corresponding recesses 61 arranged in the upper surface 59 of the elastic means 13. The assembly is therefore locked and cannot be detached, not even through the rear end 39, as a result of the projections 57 and 49 and their respective recesses 43 and 61, or through the opening 15, as a result of the lower segment 45 of the retainer 11 being wider than the opening 15. Preferably, as can be seen in the drawings, the lower segment 45 has a dovetail geometry that fits with the ends of the side walls of the longitudinal hole 35 bordering the opening 15.

## Claims

1. A wear or protection system for a tool of an earth moving machine, comprising a wear element (1), a support (3) supporting said wear element (1), and a pin (7), where when said wear element (1) is mounted on said support (3) there is defined between both a housing (5) in the form of a through hole suitable for housing said pin (7), where said pin (7) has a lower surface (17) and an upper surface (19) and elastic means (13) such that the distance between the lower surface (17) and the upper surface (19) is variable depending on the value of a compressive force applied on said upper surface (19), where said housing (5) has a base surface (27) facing said lower surface (17) when said pin (7) is in said housing (5), and a compression surface (29) facing said upper surface (19) when said pin (7) is in said housing (5),
**characterized in that**
said base surface (27) and a first portion (31) of said compression surface (29) belong to one of said wear element (1) and support (3), and the distance between said base surface (27) and said first portion (31) has a fixed value Df, whereas a second portion (33) of said compression surface (29) belongs to the other one of said wear element (1) and support (3), where the distance between said base surface (27) and said second portion (33) is variable depending on the wear of said wear element (1) and said support (3), having a minimum value Dmin when said wear element (1) and said support (3) are new and increasing as said wear element (1) and said support (3) become worn, where Dmin is less than Df,
where said pin (7), in the compressed state, has a height H equal to said minimum value Dmin, and as said wear element (1) and said support (3) become worn, said elastic means (13) increase said height H until reaching the value Df, and
where said pin (7) comprises a projection or a recess (23) in one of said lower or upper surfaces, and there is a recess or a projection (25), respectively, suitable for housing said projection or said recess (23) of said pin (7), in said base surface (27) or said first portion (31), respectively.

2. The system according to claim 1, **characterized in that** said pin (7) comprises a recess (23) in said upper surface (19) and there is a projection (25), suitable for being housed in said recess (23), in said first portion (31).

3. The system according to one of claims 1 or 2, **characterized in that** said base surface (27) and said first portion (31) of said compression surface (29) belong to said wear element (1), and said second portion (33) belongs to said support (3).

4. The system according to any of claims 1 to 3, **characterized in that** said pin (7) comprises a shell (9), a retainer (11) and elastic means (13), where:
[a] said shell (9) is elongated, defining a longitudinal axis, and has a lower surface which is said lower surface (17) of the pin (7) and a longitudinal hole (35) having a closed front end (37) and an open rear end (39), where said longitudinal hole (35) has an upper opening (15), opposite said lower surface of the shell (9), extending to the rear end (39), where said opening (15) has a width, measured in a transverse direction with respect to said longitudinal axis, less than the maximum width, measured in said transverse direction, of said hole (35),
[b] said retainer (11) is housed in said hole (35) and has an upper surface, which is said upper surface (19) of the pin (7), and projects through said opening (15), and a lower surface (47), where said retainer (11) has an upper segment (21) with a width, measured in a transverse direction with respect to said longitudinal axis, less than the width of said opening (15), and a lower segment (45) with a width, measured in a transverse direction with respect to said longitudinal axis, greater than the width of said opening (15),
[c] said elastic means (13) are arranged between a lower surface (41) of the hole (35) and said lower surface (47) of the retainer (11).

5. The system according to claim 4, **characterized in that** there are first locking means between said hole (35) and said elastic means (13), and there are second locking means between said elastic means (13) and said retainer (11).

6. The system according to one of claims 4 or 5, **characterized in that** said elastic means (13) are an elongated part that is elastically compressible in a transverse direction with respect to said longitudinal axis, with an upper surface (59) facing said lower surface (47) of the retainer (11), and a lower surface (55) oriented towards said lower surface (17) of the pin (7).

7. The system according to claim 6, **characterized in that** said elastic means (13) comprise a first upper segment (51) made of a solid material and a second elastic lower segment (53).

8. The system according to claim 6, **characterized in that** said elastic means (13) comprise a first upper segment (51) made of a polymeric material, preferably polyurethane, and a second lower segment (53) made of an elastic polymeric material with multiple gas-filled, closed internal cavities.

9. The system according to any of claims 5 to 8, **characterized in that** said first locking means comprise at least one projection (57) with a height, measured in a transverse direction with respect to said longitudinal axis, increasing from a point close to said front end (37) to a point close to said rear end (39), and a recess (43) suitable for housing said projection (57), where said projection (57) is in said elastic means (13) and said recess (43) is in said hole (35), or vice versa.

10. The system according to any of claims 6 to 8 and claim 9, **characterized in that** said projection (57) is on said lower surface (55) of the elastic means (13) and said recess (43) is on the lower surface (41) of said hole (35).

11. The system according to any of claims 5 to 10, **characterized in that** said second locking means comprise at least one projection (49) having a height, measured in a transverse direction with respect to said longitudinal axis, increasing from a point close to said front end (37) to a point close to said rear end (39), and a recess (61) suitable for housing said projection (49), where said projection (49) is in said retainer (11) and said recess (61) is in said elastic means (13), or vice versa.

12. The system according to any of claims 6 to 8 and claim 11, **characterized in that** said projection (49) is on the lower surface (47) of said retainer (11) and said recess (61) is in the upper surface (59) of said elastic means (13).

13. A pin (7) for a wear or protection system for a tool of an earth moving machine, comprising a wear element (1), a support (3) supporting said wear element (1), and said pin (7), where when said wear element (1) is mounted on said support (3) there is defined between both a housing (5) in the form of a through hole suitable for housing said pin (7), where said pin (7) has a lower surface (17) and an upper surface (19) and elastic means (13) such that the distance between the lower surface (17) and the upper surface (19) is variable depending on the value of a compressive force applied on said upper surface (19),
**characterized in that** it comprises a shell (9), a retainer (11) and elastic means (13), where:
[a] said shell (9) is elongated, defining a longitudinal axis, and has a lower surface which is said lower surface (17) of the pin (7) and a longitudinal hole (35) having a closed front end (37) and an open rear end (39), where said longitudinal hole (35) has an upper opening (15), opposite said lower surface of the shell (9), extending to the rear end (39), where said opening (15) has a width, measured in a transverse direction with respect to said longitudinal axis, less than the maximum width, measured in said transverse direction, of said hole (35),
[b] said retainer (11) is housed in said hole (35) and has an upper surface, which is said upper surface (19) of the pin (7), and projects through said opening (15), and a lower surface (47), where said retainer (11) has an upper segment (21) with a width, measured in a transverse direction with respect to said longitudinal axis, less than the width of said opening (15) and a lower segment (45) with a width, measured in a transverse direction with respect to said longitudinal axis, greater than the width of said opening (15),
[c] said elastic means (13) are arranged between a lower surface (41) of the hole (35) and said lower surface (47) of the retainer (11).

14. The pin (7) according to claim 13, **characterized in that** there are first locking means between said hole (35) and said elastic means (13), and where there are second locking means between said elastic means (13) and said retainer (11).

15. The pin (7) according to one of claims 13 or 14, **characterized in that** said elastic means (13) are an elongated part that is elastically compressible in a transverse direction with respect to said longitudinal axis, with an upper surface (59) facing said lower surface (47) of the retainer (11), and a lower surface (55) oriented towards said lower surface (17) of the pin (7).

16. The pin (7) according to claim 15, **characterized in that** said elastic means (13) comprise a first upper segment (51) made of a solid material and a second elastic lower segment (53).

17. The pin (7) according to claim 15, **characterized in that** said elastic means (13) comprise a first upper segment (51) made of a polymeric material, preferably polyurethane, and a second lower segment (53) made of an elastic polymeric material with multiple gas-filled, closed internal cavities.

18. The pin (7) according to any of claims 14 to 17, **characterized in that** said first locking means comprise at least one projection (57) with a height, measured in a transverse direction with respect to said longitudinal axis, increasing from a point close to said front end (37) to a point close to said rear end (39), and a recess (43) suitable for housing said projection (57), where said projection (57) is in said elastic means (13) and said recess (43) is in said hole (35), or vice versa.

19. The pin (7) according to any of claims 15 to 17 and claim 18, **characterized in that** said projection (57) is in said lower surface (55) of the elastic means (13) and said recess (43) is in the lower surface (41) of said hole (35).

20. The pin (7) according to any of claims 14 to 19, **characterized in that** said second locking means comprise at least one projection (49) having a height, measured in a transverse direction with respect to said longitudinal axis, increasing from a point close to said front end (37) to a point close to said rear end (39), and a recess (61) suitable for housing said projection (49), where said projection (49) is in said retainer (11) and said recess (61) is in said elastic means (13), or vice versa.

21. The pin (7) according to any of claims 15 to 17 and claim 20, **characterized in that** said projection (49) is in the lower surface (47) of said retainer (11) and said recess (61) is in the upper surface (59) of said elastic means (13).
